# EUROPÄISCHE PATENTANMELDUNG

(11) **EP 4 624 669 A1**
(43) Veröffentlichungstag der Anmeldung: **01.10.2025**
(21) Anmeldenummer: 24165894.7
(22) Anmeldetag: 25.03.2024
(51) Int. Cl.: E02F 3/32, E02F 9/08, E02F 9/20

(54) **ELEKTRISCHE BAUMASCHINE**

(71) Anmelder: Wacker Neuson Linz GmbH, 4063 Hörsching (AT)
(72) Erfinder: FALZBERGER, Markus, 4070 Pupping (AT)
(74) Vertreter: Hübscher & Partner Patentanwälte GmbH

(57) **Zusammenfassung**

Es wird eine Elektrische Baumaschine mit einem Arbeitsaggregat (2) und mit einem Oberwagen (1), in dem ein Elektromotor (7) zum Antreiben eines Fahrantriebs (5) und/oder des Arbeitsaggregats (2) und ein elektrischer Energiespeicher (8) zum Versorgen des Elektromotors (7) mit elektrischer Energie angeordnet ist, beschrieben. Um trotz kompakter, einfacher und gewichtssparender Bauweise einen flexiblen Einbau der im Oberwagen (1) befindlichen Komponenten zu erlauben, ohne dabei Einbußen hinsichtlich der Stabilität und der Baumaschinenführung zu bedingen, wird vorgeschlagen, dass eine Energiespeicherhauptachse (9) des elektrischen Energiespeichers (8) schräg zur Oberwagenlängsachse (10) verläuft.

## Beschreibung

Die Erfindung bezieht sich auf eine elektrische Baumaschine mit einem Arbeitsaggregat und mit einem Oberwagen, in dem ein Elektromotor zum Antreiben eines Fahrantriebs und/oder des Arbeitsaggregats und ein elektrischer Energiespeicher zum Versorgen des Elektromotors mit elektrischer Energie angeordnet ist.

Für beengte Baustelleneinsätze entwickeln sich die Bestrebungen dahingehend, möglichst kompakte Baumaschinen herzustellen. Aus dem Stand der Technik (EP4306724A1) sind hierzu elektrische hecküberstandsfreie Baumaschinen, beispielsweise Zero Tail Bagger, bekannt. Damit der Oberwagen der Baumaschine ausreichend kompakt ausgebildet werden kann, sind die Rotationsachse des Elektromotors und die Längsachse der hydraulischen Pumpe parallel zu einer Hochachse, also stehend angeordnet. Auf diese Weise kann die Höhe des Oberwagens zugunsten einer kompakten Länge und Breite des Oberwagens ausgenutzt werden. Nachteilig daran ist allerdings, dass sich dadurch Einschränkungen hinsichtlich der freien Ausrichtung des Elektromotors sowie der hydraulischen Pumpe ergeben, was zu Sonderausführungen dieser Komponenten und aufwendigen Kontaktierungen und Verlegungen der Hydraulikleitungen führen kann.

Eine weitere Anforderung bei insbesondere elektrischen Baumaschinen liegt in einer möglichst leichten Bauweise, um ressourcenschonende Arbeitseinsätze zu ermöglichen. Aufgrund des gewünschten geringen Eigengewichts solcher Baumaschinen sind zur Stabilitätserhöhung im Oberwagen Verstrebungen notwendig, die allerdings eine gegenseitige Anpassung der Komponenten und der Verstrebungen im Oberwagen bedingen, was teils komplexe Konstruktionen verlangt. Insbesondere bei leichten Baumaschinen mit Drehfunktion um einen Drehkranz ergibt sich dabei zusätzlich das Problem, dass die schweren Komponenten im Oberwagen nahe am und gleichverteilt um den Drehkranzmittelpunkt angeordnet sein müssen, um eine schonende und ruhige Drehfunktion bei der Baumaschinenführung zu ermöglichen. Durch diese Randbedingungen wird wiederum eine kompakte Anordnung der Komponenten im Oberwagen erschwert.

Der Erfindung liegt somit die Aufgabe zugrunde, eine elektrische Baumaschine der eingangs erwähnten Art vorzuschlagen, die trotz kompakter, einfacher und gewichtssparender Bauweise einen flexiblen Einbau der im Oberwagen befindlichen Komponenten erlaubt, ohne Einbußen hinsichtlich der Stabilität und der Baumaschinenführung zu bedingen.

Die Erfindung löst die gestellte Aufgabe dadurch, dass eine Energiespeicherhauptachse des elektrischen Energiespeichers schräg zur Oberwagenlängsachse verläuft. Zufolge der erfindungsgemäßen Merkmale ergibt sich im Oberwagen ein einfach zugänglicher Freiraum, in dem die notwendigen Komponenten der Baumaschine angeordnet werden können. Im Gegensatz zum Stand der Technik muss zugunsten einer gleichmäßigen Gewichtsverteilung der Energiespeicher nämlich nicht mittig bezüglich der Oberwagenbreite angeordnet sein, sodass der restliche nicht von dem Energiespeicher eingenommene Oberwagen in zwei verhältnismäßig kleine Freiräume, nämlich links und rechts des Energiespeichers aufgeteilt wird, sondern kann der Energiespeicher, beispielsweise ein Batteriepack, außermittig bezogen auf die Oberwagenbreite angeordnet sein. Durch die schräge Ausrichtung der Energiespeicherhauptachse ist nämlich der Schwerpunkt des Energiespeichers, selbst wenn dieser in eine Ecke des Oberwagens mündet, ausreichend nahe im Bereich der Oberwagenmitte angeordnet, sodass es zu keinen unkompensierbaren Gewichtsverteilungen kommt. Bei einer wandseitigen Anordnung des Energiespeichers in der Ecke des Oberwagens, wobei die Energiespeicherhauptachse parallel zur Oberwagenlängsachse ausgerichtet ist, würden zwar ähnliche positive Platzverhältnisse geschaffen werden, allerdings würde der weiter außermittige Schwerpunkt des Energiespeichers zu ungünstigeren Gewichtsverteilungen und damit zu einer ungünstigeren Baumaschinenführung führen. Die schräge Ausrichtung der Energiespeicherhauptachse hat weiter den Vorteil, dass Verstrebungen zum Stärken der Oberwagenwände entlang des Energiespeichers verlaufen können. Auf die Verstrebung schwächende Knicke, um dem Energiespeicher auszuweichen, kann verzichtet werden, wodurch die Verstrebung nicht nur einfacher aufgebaut sein kann, sondern ebenfalls stabiler ist, was leichte Bauweisen des Oberwagens begünstigt. Dadurch, dass der schräg ausgerichtete Energiespeicher vorwiegend auf einer Seite des Oberwagens angeordnet sein kann, ergibt sich auf der anderen Seite ein zusammenhängender Freiraum, der genügend Platz für die anderen für eine elektrische Baumaschine typischen Komponenten bietet. Typische Komponenten können Elektromotor, hydraulische Pumpe, Inverter, Öltank, Kühleinrichtung, hydraulischer Steuerblock, Drehantrieb für einen Drehkranz und ein Drehkranz sein. Bevorzugt ist der Energiespeicher im Heckbereich des Oberwagens angeordnet und in Richtung eines Oberwagenhinterecks ausgerichtet. Im Sinne der Erfindung kann die Energiespeicherhauptachse die Energiespeicherlängsachse sein. Insbesondere liegen die Energiespeicherhauptachse respektive die Energiespeicherlängsachse und die Oberwagenlängsachse in einer Horizontalebene. Schräg zur Oberwagenlängsachse bedeutet im Sinne der Erfindung von einer zur Oberwagenlängsachse querverlaufenden Linie in einem spitzen oder stumpfen Winkel abweichend. Die Energiespeicherhauptachse verläuft demnach nicht orthogonal zur Oberwagenlängsachse, sondern in einem Winkel ungleich 90°. Als elektrische Baumaschine kann ein Bagger, insbesondere ein hecküberstandsfreier Bagger, mit einem Baggerarm als Arbeitsaggregat vorgesehen sein. Die Baumaschine kann einen Unterwagen mit dem Fahrantrieb und einen am Unterwagen aufgesetzten Oberwagen umfassend das Arbeitsaggregat und einen Bedienerraum aufweisen.

Besonders vorteilhafte Platzbedingungen ergeben sich, wenn die Energiespeicherhauptachse und die Oberwagenlängsachse einen Winkel von 40°-15°, bevorzugt von 30°- 18° einschließen. Es hat sich nämlich überraschenderweise herausgestellt, dass sich dadurch nicht nur ein unterbrechungsfreier Freiraum, der besonders günstige Platzverhältnisse für einen flexiblen Einbau der Baumaschinenkomponenten ermöglicht, auf der dem Energiespeicher gegenüberliegenden Seite ergibt, sondern auch eine ruhige Drehung des Oberwagens durch einen Drehkranz ermöglicht wird, da der so angeordnete Schwerpunkt des Energiespeichers eine gleichmäßige Gewichtsverteilung im Oberwagen bedingt.

Um trotz einer Leichtbauweise die verlangten Anforderungen hinsichtlich der Stabilität und Robustheit der Baumaschine einzuhalten und dies durch möglichst einfache Bauweise zu ermöglichen, wird vorgeschlagen, dass zwischen einer Vorderwand und einer daran anschließenden Seitenwand des Oberwagens eine durchgehend parallel zur Energiespeicherhauptachse verlaufende Verstrebung vorgesehen ist. Vorzugsweise kann diese Verstrebung die Vorderwand mit der Seitenwand verbinden. Auf diese Weise kann die Verstrebung, welche mit der Vorderwand und der Seitenwand ein Dreieck bilden kann, knickfrei ausgeführt sein, was günstige Kraftabtragungsbedingungen bedingt. Die Verstrebung, beispielsweise ein Blechsteg, kann mit dem Oberwagenboden verbunden sein. Im Sinne einer besonders kompakten Bauweise kann der Abstand der Verstrebung zum Energiespeicher geringer als die Höhe der Verstrebung sein. Bevorzugt kann der Abstand weniger als 50% der Höhe der Verstrebung sein. Im Falle einer Verstrebung mit ansteigenden respektive abfallenden Abschnitten kann die durchschnittliche Höhe der Verstrebung im Überlappungsbereich zwischen Verstrebung und Energiespeicherseitenwand herangezogen werden. Die Verstrebung kann den Oberwagen räumlich aufteilen. Der elektrische Energiespeicher kann auf einer Seite der Verstrebung liegen. Vorteilhafte funktionelle Zusammenhänge zwischen den Komponenten können erzielt werden, wenn auf derselben Seite auch der Elektromotor und die davon angetriebene Hydraulikpumpe liegen. Ebenfalls auf dieser Seite kann die Kühleinrichtung und/oder der hydraulischer Steuerblock und/oder der Hydrauliköltank und/oder der Drehantrieb für den Drehkranz und/oder der Drehkranz sein. An der anderen Seite der Verstrebung können der DC-Wandler für das Bordnetz und/oder die elektronische Steuerung und/oder ein hydraulischer Druckspeicher angeordnet sein.

Bei einer die Baumaschine mit einem einen Drehkranzmittelpunkt aufweisenden Drehkranz zum Drehen eines Oberwagens der Baumaschine um eine Rotationsachse relativ zum Fahrantrieb ergibt sich eine besonders gleichmäßige Baumaschinenführung, wenn der Schwerpunkt des elektrischen Energiespeichers auf der, bezüglich der durch den Drehkranzmittelpunkt verlaufenden Oberwagenlängsachse, dem Arbeitsaggregat gegenüberliegenden Seite im Oberwagen angeordnet ist. Somit sind sowohl das Arbeitsaggregat und der Schwerpunkt des Energiespeichers außermittig -aber auf unterschiedlichen Seiten des Drehkranzmittelpunkts- entlang der Oberwagenbreite angeordnet und tarieren sich gegenseitig aus.

Um eine einfache sowie rasche Wartung des elektrischen Energiespeichers zu ermöglichen, kann eine Seitenwand und eine daran anschließende Rückwand des Oberwagens wenigstens abschnittsweise von einer ausschwenkbaren Zugangsklappe gebildet sein. Durch Öffnen der bevorzugt gemeinsamen Zugangsklappe der Seiten- und Rückwand wird demnach nicht nur der Heckbereich, sondern auch der Seitenbereich des Oberwagens wenigstens abschnittsweise geöffnet, sodass der elektrische Energiespeicher, der insbesondere mit einer seiner Ecken im Bereich der Seitenwand und mit einer seiner Ecken im Bereich der Rückwand des Oberwagens angeordnet ist, in Richtung der Energiespeicherhauptachse aus dem Oberwagen genommen werden kann. Dies wird insbesondere dadurch erleichtert, wenn die in Richtung der Energiespeicherhauptachse projizierte Projektionsfläche der Zugangsklappe größer als die in Richtung der Energiespeicherhauptachse projizierte Projektionsfläche des Energiespeichers ist und wenn die Projektionsfläche des Energiespeichers vollständig innerhalb der Projektionsfläche der Zugangsklappe liegt.

Damit nicht nur platzsparende, sondern auch verlustarme Stromwandelbedingungen im Oberwagen vorherrschen, wird vorgeschlagen, dass dem elektrischen Energiespeicher ein Inverter zugeordnet ist, dessen Inverterlängsachse parallel zur Energiespeicherhauptachse verläuft. Auf diese Weise kann der Inverter an die Energiespeicherseitenwand angrenzend angeordnet sein, sodass sich besonders kurze elektrische Kontaktwege ergeben. Vorteilhafterweise kann der Energiespeicher gemeinsam mit dem Inverter im Strömungsbereich der Baumaschinenkühlung liegen, wodurch beide Komponenten gleichen Kühlbedingungen ausgesetzt sind, was zu einer langsameren Alterung der Komponenten führen kann.

In einer Ausführungsform kann der Inverter eine gemeinsame Baueinheit mit dem Elektromotor bilden, dessen Rotationsachse parallel zur Energiespeicherhauptachse verläuft. Der Inverter kann über einen Steg auf dem Elektromotor aufgesetzt sein, sodass beide Komponenten an die Energiespeicherseitenwand angrenzend angeordnet sein können. Die Ausrichtung der Rotationsachse parallel zur Energiespeicherhauptachse kann unabhängig davon erfolgen, ob der Elektromotor eine gemeinsame Baueinheit mit dem Inverter bildet.

In einer anderen Ausführungsform kann der Elektromotor eine zu einer, normal zum Oberwagenboden stehenden, Normalachse parallel verlaufende Rotationsachse ausbilden. Ein analoger Vorteil ergibt sich, wenn im Oberwagen ein hydraulischer Steuerblock vorgesehen ist, dessen Längsachse parallel zu dieser Normalachse verläuft. Im Falle einer horizontalen Ausrichtung des Oberwagenbodens ist die Normalachse die Hochachse. Der hydraulische Steuerblock kann angrenzend an einer Energiespeicherseitenwand angeordnet sein, die im Wesentlichen im rechten Winkel zur Verstrebung verläuft.

Üblicherweise weisen Baumaschinen einen Oberwagen mit einem Bedienerraum auf, in der eine Bedienersitzfläche angeordnet ist. Um die Länge der Baumaschine reduzieren zu können, wird vorgeschlagen, dass eine Bedienersitzfläche eine in Richtung der Hochachse projizierte Projektionsfläche des elektrischen Energiespeichers wenigstens abschnittsweise überlagert.

Eine vorteilhafte Reduktion der Bauhöhe der Baumaschine kann dadurch erreicht werden, dass ein Bodenabschnitt des elektrischen Energiespeichers unterhalb einer Bodenfläche eines Bedienerraums des Oberwagens angeordnet ist. Insbesondere kann der elektrische Energiespeicher zumindest mit 10%, bevorzugt mit 20%, besonders bevorzugt mit 30% seiner Gesamthöhe unterhalb der Bodenfläche des Bedienerraums des Oberwagens angeordnet sein.

In der Zeichnung ist der Erfindungsgegenstand beispielsweise dargestellt. Es zeigen
- Fig. 1: eine schematisch dargestellte erfindungsgemäße elektrische Baumaschine in Seitenansicht,
- Fig. 2: eine schematische Draufsicht auf einen Abschnitt eines Oberwagens einer erfindungsgemäßen elektrischen Baumaschine,
- Fig. 3: eine perspektivische Darstellung eines Abschnitts eines Oberwagens einer erfindungsgemäßen elektrischen Baumaschine und
- Fig. 4: eine perspektivische Darstellung einer Baueinheit umfassend einen Elektromotor und einen Inverter.

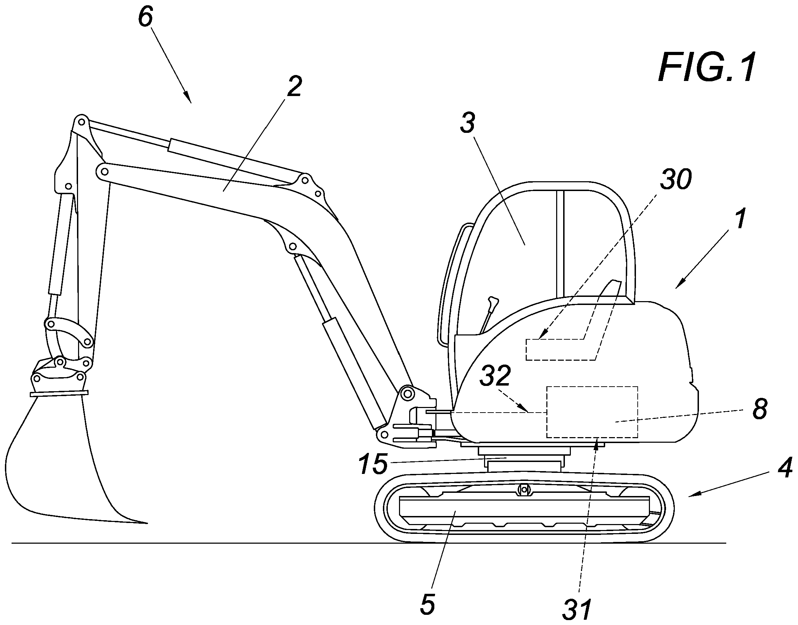

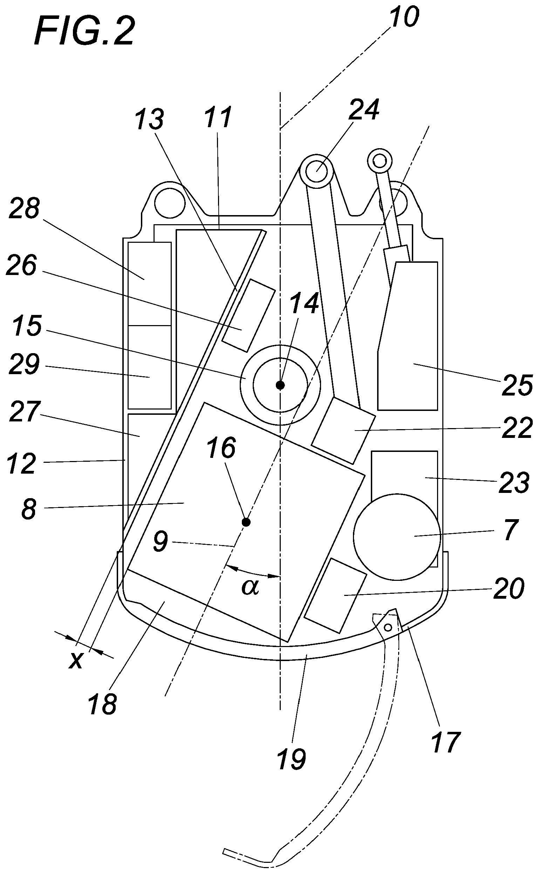

Eine erfindungsgemäße Baumaschine ist in Fig. 1 dargestellt und weist einen Oberwagen 1 mit einem Arbeitsaggregat 2 und einem Bedienerraum 3 auf. Der Oberwagen 1 ist relativ zu einem Unterwagen 4 um eine Rotationsachse drehbar auf diesem angeordnet. Der Unterwagen 4 umfasst einen Fahrantrieb 5. Die Baumaschine kann ein Bagger 6 sein. Im Oberwagen 1 kann, wie dies beispielsweise aus der Fig. 2 hervorgeht, ein Elektromotor 7 zum Antreiben des Fahrantriebs 5 und/oder des Arbeitsaggregats 2 vorgesehen sein. Zum Versorgen des Elektromotors 7 wird ein Energiespeicher 8 eingesetzt. Erfindungsgemäß ist die Energiespeicherhauptachse 9, nämlich die Energiespeicherlängsachse des elektrischen Energiespeichers 8 schräg zur Oberwagenlängsachse 10 verlaufend angeordnet. Die Energiespeicherhauptachse 9 und die Oberwagenlängsachse 10 verlaufen in einer gemeinsamen Horizontalebene, die in der Fig. 2 parallel zur Bildebene verläuft. Auf diese Weise ergeben sich vorteilhafte Platz- und Gewichtverteilungsbedingungen im Oberwagen 1, insbesondere dann, wenn die Energiespeicherhauptachse 9 und die Oberwagenlängsachse 10 einen Winkel α von 22° - 18°, vorzugsweise 20° einschließen.

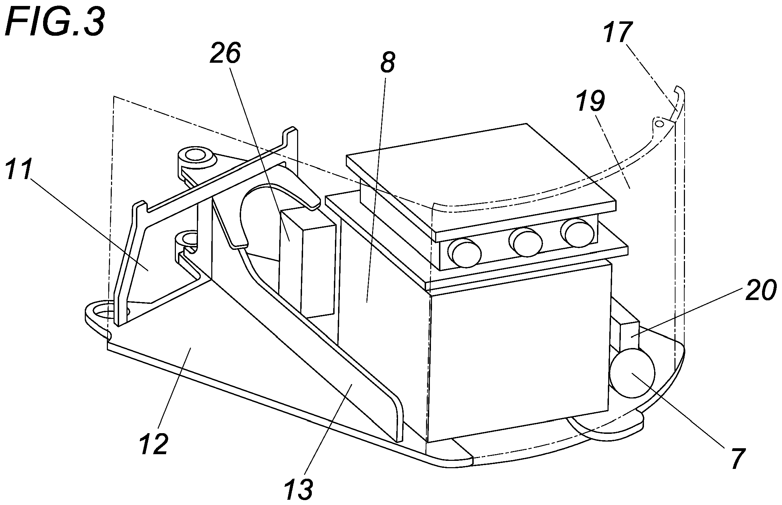

Den Figs. 2 und 3 kann entnommen werden, dass zwischen einer Vorderwand 11 und einer daran anschließenden Seitenwand 12 des Oberwagens 1 eine Verstrebung 13 verläuft, die gemeinsam mit der Vorderwand 11 und der Seitenwand 12 bei Draufsicht ein Dreieck bildet. Die Verstrebung 13 verläuft durchgehend parallel zur Energiespeicherhauptachse 9, also knickfrei, was einen vorteilhaften Kraftabtrag bedingt. Der insbesondere größte Abstand x der Verstrebung 13 zum Energiespeicher 8 kann geringer als die Höhe der Verstrebung 13 im Bereich des Energiespeichers 8 sein, wie dies in Fig. 3 angedeutet ist.

Zum Drehen des Oberwagens 1 relativ zum Unterwagen 4 kann die Baumaschine einen einen Drehkranzmittelpunkt 14 aufweisenden Drehkranz 15 aufweisen. Im Sinne einer bevorzugten Gewichtsverteilung und einer reibungslosen Drehbarkeit des Oberwagens 1 kann der Schwerpunkt 16 des elektrischen Energiespeichers 8 auf einer Seites der durch den Drehkranzmittelpunkt 14 verlaufenden Oberwagenlängsachse 10 verlaufen und das Arbeitsaggregat 2 auf der anderen Seite auf einer Anlenkung 24 ansetzen.

Für eine besonders einfache Zugänglichkeit kann der Energiespeicher 8 im Heckbereich des Oberwagens 1 angeordnet und in Richtung eines Oberwagenhinterecks ausgerichtet sein. Dies bedeutet, dass eine Ecke des Energiespeichers 8 im Bereich der Seitenwand 12 und eine Ecke im Bereich der Rückwand 17 angeordnet ist, sodass sich zwischen dem Energiespeicher 8, der Seitenwand 12 und der Rückwand im Oberwagen ein Wartungsbereich 18 ergibt. Im Bereich der Seitenwand 12 respektive Rückwand 17 bedeutet, dass der kleinste Abstand von dem Energiespeicher 8 zur jeweiligen Wand 12,17 kleiner 15 cm, vorzugsweise kleiner 10 cm ist. Der Wartungsbereich 18 kann über eine Zugangsklappe 19 erreicht werden. Die ausschwenkbare Zugangsklappe 19 kann dabei einen Teil der Seitenwand 12 und einen Teil der Rückwand 17 bilden, sodass beim Öffnen der Zugangsklappe 19 sowohl die Seitenwand 12 als auch die Rückwand 17 abschnittsweise geöffnet werden.

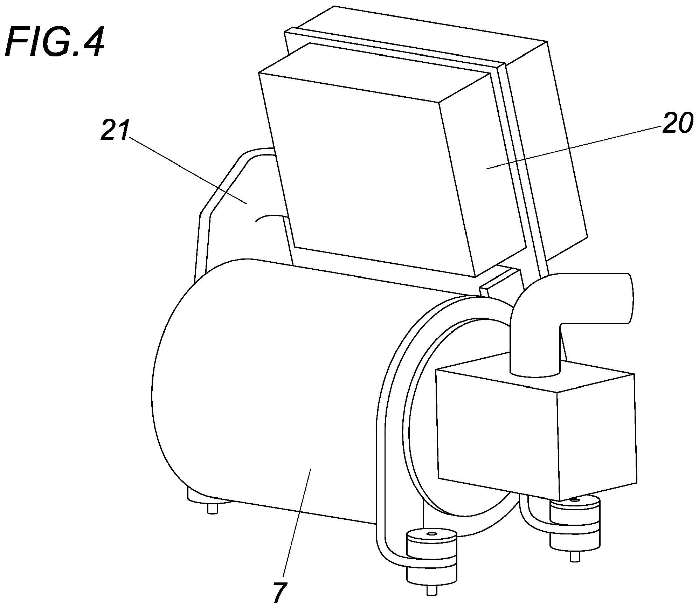

Der Inverter 20 für den Energiespeicher 8 kann so im Oberwagen 1 angeordnet sein, dass die Inverterlängsachse parallel zur Energiespeicherhauptachse 9 ausgerichtet ist (Fig. 2). Insbesondere kann der Inverter 20 an die Energiespeicherseitenwand angrenzen, um eine gemeinsame Kühlung zu nutzen. Ist die Rotationsachse des Elektromotors 7 ebenfalls parallel zur Energiespeicherhauptachse 9 ausgerichtet, so kann der Inverter 20 auf besonders einfache Weise eine gemeinsame Baueinheit (Figs. 3 und 4) mit dem Elektromotor 7 bilden. Der Inverter 20 kann über einen Verbindungssteg 21 mit dem Elektromotor 7 verbunden sein. In Fig. 2 ist eine alternative Ausführungsform angedeutet, bei der der Elektromotor 7 eine zur Normalachse, welche normal zum Oberwagenboden steht, parallele Rotationsachse ausbildet. Im Falle eines horizontal verlaufenden Oberwagenbodens ist die Normalachse eine Hochachse, die in Fig. 2 in die Bildebene zeigt. Auf ähnliche Weise kann auch eine Längsachse eines hydraulischen Steuerblocks 22 parallel zur Normalachse bzw. Hochachse verlaufen.

Aus Fig. 2 ist ersichtlich, dass die Verstrebung 13 den Oberwagen 1 räumlich aufteilen kann. Der elektrische Energiespeicher 8, der Elektromotor 7, die davon angetriebene Hydraulikpumpe 23, die Kühleinrichtung (nicht dargestellt), der hydraulische Steuerblock 22, der Hydrauliköltank 25, der Drehantrieb 26 für den Drehkranz 15 und der Drehkranz 15 können auf einer Seite der Verstrebung liegen. Auf der anderen Seite der Verstrebung 13 können der DC-Wandler 27 für das Bordnetz, die elektronische Steuerung 28 und ein hydraulischer Druckspeicher 29 angeordnet sein. Die Komponenten sind in den Figs. der Einfachheit halber lediglich schematisch dargestellt.

Aus der Fig. 1 kann entnommen werden, dass eine Bedienersitzfläche 30 eine in Richtung der Hochachse projizierte Projektionsfläche des elektrischen Energiespeichers 8 abschnittsweise überlagert und dass ein Bodenabschnitt 31 des elektrischen Energiespeichers 8 unterhalb einer Bodenfläche 32 eines Bedienerraums 3 des Oberwagens 1 angeordnet ist.

## Patentansprüche

1. Elektrische Baumaschine mit einem Arbeitsaggregat (2) und mit einem Oberwagen (1), in dem ein Elektromotor (7) zum Antreiben eines Fahrantriebs (5) und/oder des Arbeitsaggregats (2) und ein elektrischer Energiespeicher (8) zum Versorgen des Elektromotors (7) mit elektrischer Energie angeordnet ist, **dadurch gekennzeichnet, dass** eine Energiespeicherhauptachse (9) des elektrischen Energiespeichers (8) schräg zur Oberwagenlängsachse (10) verläuft.

2. Elektrische Baumaschine nach Anspruch1, **dadurch gekennzeichnet, dass** die Energiespeicherhauptachse (9) und die Oberwagenlängsachse (10) einen Winkel von 40° - 15°, bevorzugt von 30° - 18° einschließen.

3. Elektrische Baumaschine nach Anspruch 1 oder 2, **dadurch gekennzeichnet, dass** zwischen einer Vorderwand (11) und einer daran anschließenden Seitenwand (12) des Oberwagens (1) eine durchgehend parallel zur Energiespeicherhauptachse (9) verlaufende Verstrebung (13) vorgesehen ist, die vorzugsweise die Vorderwand (11) mit der Seitenwand (12) verbindet.

4. Elektrische Baumaschine nach einem der Ansprüche 1 bis 3, **dadurch gekennzeichnet, dass** die Baumaschine einen einen Drehkranzmittelpunkt (14) aufweisenden Drehkranz (15) zum Drehen eines Oberwagens (1) der Baumaschine relativ zum Fahrantrieb (5) aufweist und dass der Schwerpunkt (16) des elektrischen Energiespeichers (8) auf der, bezüglich der durch den Drehkranzmittelpunkt (14) verlaufenden Oberwagenlängsachse (10), dem Arbeitsaggregat (2) gegenüberliegenden Seite im Oberwagen (1) angeordnet ist.

5. Elektrische Baumaschine nach einem der Ansprüche 1 bis 4, **dadurch gekennzeichnet, dass** eine Seitenwand (12) und eine daran anschließende Rückwand (17) des Oberwagens (1) wenigstens abschnittsweise von einer ausschwenkbaren Zugangsklappe (19) gebildet ist.

6. Elektrische Baumaschine nach einem der Ansprüche 1 bis 5, **dadurch gekennzeichnet, dass** dem elektrischen Energiespeicher (8) ein Inverter (20) zugeordnet ist, dessen Inverterlängsachse parallel zur Energiespeicherhauptachse (9) verläuft.

7. Elektrische Baumaschine nach einem der Ansprüche 1 bis 6, **dadurch gekennzeichnet, dass** der Inverter (20) eine gemeinsame Baueinheit mit dem Elektromotor (7) bildet, dessen Rotationsachse parallel zur Energiespeicherhauptachse (9) verläuft.

8. Elektrische Baumaschine nach einem der Ansprüche 1 bis 6, **dadurch gekennzeichnet, dass** der Elektromotor (7) eine zu einer, normal zum Oberwagenboden stehenden, Normalachse parallel verlaufende Rotationsachse ausbildet.

9. Elektrische Baumaschine nach einem der Ansprüche 1 bis 8, **dadurch gekennzeichnet, dass** im Oberwagen (1) ein hydraulischer Steuerblock (22) vorgesehen ist, dessen Längsachse parallel zu einer, normal zum Oberwagenboden stehenden, Normalachse verläuft.

10. Elektrische Baumaschine nach einem der Ansprüche 1 bis 9, **dadurch gekennzeichnet, dass** eine Bedienersitzfläche (30) eine in Richtung einer Hochachse projizierte Projektionsfläche des elektrischen Energiespeichers (8) wenigstens abschnittsweise überlagert.

11. Elektrische Baumaschine nach einem der Ansprüche 1 bis 10, **dadurch gekennzeichnet, dass** ein Bodenabschnitt (31) des elektrischen Energiespeichers (8) unterhalb einer Bodenfläche (32) eines Bedienerraums (3) des Oberwagens (1) angeordnet ist.
